# EUROPÄISCHE PATENTSCHRIFT

(11) **EP 4 226 764 B1**
(45) Veröffentlichungstag und Bekanntmachung des Hinweises auf die Patenterteilung: **02.04.2025**
(21) Anmeldenummer: 22156384.4
(22) Anmeldetag: 11.02.2022
(51) Int. Cl.: A01K 13/00

(54) **SCHUTZAUSRÜSTUNG FÜR PFERDE**
PROTECTIVE EQUIPMENT FOR HORSES
ÉQUIPEMENT DE PROTECTION POUR CHEVAUX

(43) Veröffentlichungstag der Anmeldung: 16.08.2023
(73) Patentinhaber: Bachmann-Münsterer, Andrea, 75053 Gondelsheim (DE)
(72) Erfinder: Bachmann-Münsterer, Andrea, 75053 Gondelsheim (DE)
(74) Vertreter: mepat Patentanwälte

(56) Entgegenhaltungen:
- WO-A1-03/043413
- WO-A1-2012/094712
- DE-A1- 2 815 043
- DE-U1- 202020 002 317
- US-A- 6 009 693

## Beschreibung

Die Erfindung betrifft eine Schutzausrüstung für Pferde.

Aus dem Stand der Technik sind als Schutzausrüstung für Pferde unter anderem Decken gut bekannt. So gibt es unterschiedliche Decken für Pferde, die unter anderem Schutz gegen Nässe, Hitze oder Insekten bieten, oder dem Abschwitzen nach der Bewegung dienen und somit Schutz vor Verkühlen bieten. Auch Magnetfelddecken explizit für Pferde zu Therapiezwecken sind bekannt, die also dem Schutz der Gesundheit dienen. Weiter ist auch bekannt, Schutz gegen Aufreiben des Pferdes durch reibende Decken zu schaffen, indem eine solche Decke mit Polsterelementen an Druckstellen ausgestattet wird.

Eine solche Decke wird in der DE 202018104593 U1 offenbart.

Die WO 2012/094712 A1 bezieht sich auf eine Kompressionsbedeckung zur Einkleidung des Körpers eines Tieres; sie erwähnt Schutzmaterialien zur Bedeckung von einem oder mehreren Bereichen des Körpers des Tieres.

Aus der WO 03/043413 A1 schließlich wird eine Pferdedecke zu Transportzwecken mit bestimmten Schutzzonen beansprucht, die an den entsprechenden, meist gefährdeten Stellen vorliegen.

Ferner ist aus der US 6,009,693 A ein Rückenprotektorelement bekannt.

Die DE 28 15 043 A1 beschreibt ebenfalls eine Pferdedecke zum Auflegen auf einen Pferderücken mit dem Zweck, vor Witterungseinflüssen zu schützen.

Auch weitere Schutzelemente für Pferde wie beispielsweise Gamaschen und Hufglocken sind bekannt; sie dienen unter anderem dazu, das Pferd vor Eigenverletzung in der Bewegung zu schützen.

All diese Schutzvorrichtungen dienen vielfältigen Zwecken, schützen aber die Pferde nicht voreinander beim Umgang miteinander. Denn beim lebhaften Miteinander von Pferden, etwa auf der Koppel, in Offenstallsystemen oder auch auf Großpaddocks, kann es durchaus dazu kommen, dass bei Aktionen zwischen den Pferden Verletzungen durch Huftritte oder aber auch durch Bisse entstehen.

Ausgehend von diesem Stand der Technik ist es Aufgabe der vorliegenden Erfindung, eine verbesserte Schutzausrüstung bereitzustellen.

Diese Aufgabe wird durch die Schutzausrüstung mit den Merkmalen des Anspruchs 1 gelöst.

Weiterbildungen der Vorrichtung sind in den Unteransprüchen ausgeführt.

Eine erste Ausführungsform einer erfindungsgemäßen Schutzausrüstung, die dazu ausgebildet ist, einem Pferd angelegt zu werden, umfasst eine Pferdedecke, die einen der Geometrie eines Pferdekörpers angepassten Grundzuschnitt hat und dazu ausgebildet ist, einen Pferderücken, einen Pferdbauch seitlich und eine Pferdebrust zu bedecken, und die Befestigungsvorrichtungen zum lösbaren Befestigen der Decke am Pferdeleib aufweist. Erfindungsgemäß weist die Pferdedecke dabei zumindest ein Protektorelement aus der Gruppe auf, die Rückenprotektorelemente, Brustprotektorelemente, Ellenbogenprotektorelemente, Rippenprotektorelemente, Flankenprotektorelemente und Schulterprotektorelemente umfasst. Weiter hat die erfindungsgemäße Schutzausrüstung zumindest ein Paar Beinschützer mit Beinprotektoren, dies können Vorderfußwurzelgelenkprotektoren und bzw. oder Sprunggelenkprotektoren sein. Dazu weist die Pferdedecke an dem Abschnitt, der, wenn die Decke auf dem Pferd liegt, nahe der Brust und den Ellbogen positioniert ist, Befestigungsvorrichtungen auf. Die Beinschützer, die die Vorderfußwurzelgelenkprotektoren umfassen, verfügen über korrespondierende Befestigungsvorrichtungen, die mit denen an der Decke verbunden und auch wieder gelöst werden können. Alternativ oder zusätzlich hat die Pferdedecke in einem Abschnitt, der bei einer Anordnung der Pferdedecke am Pferd nahe den Knien liegt, ebenfalls Befestigungsvorrichtungen, die wiederum mit Befestigungsvorrichtungen korrespondieren, die an den Beinschützern, die die Sprunggelenkprotektoren umfassen, vorliegen. Diese werden, wie auch die Befestigungsmittel an den Beinschützern für die Vorderbeine, so vorliegen, dass sie entsprechend nach oben weisen, um so mit den von der Pferdedecke nach unten weisenden Befestigungsvorrichtungen jeweils lösbar verbunden zu werden.

Mit "Pferdedecke" sind in Bezug auf den Grundschnitt hierin übliche Decken für Pferde gemeint, die dem Pferd auf den Rücken gelegt werden und die sich dann seitlich entlang dem Pferdeleib bzw. -bauch erstrecken und auch die Pferdebrust bedecken und vor dieser geschlossen werden. Zumindest vor der Brust weist daher eine solche Pferdedecke Verschluss- oder Befestigungselemente auf, die geöffnet und geschlossen werden können.

Neben diesen Befestigungsvorrichtungen an der Brust können auch Gurte vorliegen, die um den Pferdebauch gelegt werden und die die rechts und links herunterhängenden Seitenteile der Decke verbinden; üblich und bekannt sind Kreuzbegurtungen. Ferner können solche Pferdedecken Gehfalten haben, die die Bewegung für das Pferd erleichtern. Grundsätzlich können derartige Pferdedecken auch einen Schweifriemen aufweisen, der es erlaubt, dass die beiden Seitenflächen einer solchen Decke am Gesäß des Pferdes miteinander verbunden werden; der Schweifriemen wird dazu unter der Schweifrübe eines Pferdes hindurch geführt und schützt die Pferdedecke vor dem Verrutschen.

Erfindungsgemäß kann nach einer weiteren Ausführungsform der Erfindung der Grundschnitt der Decke im Bereich des Übergangs des Pferdeleibs zu den Beinen verlängert sein, also einen angeschnittenen Abschnitt pro Bein aufweisen, der entsprechend dafür geeignet ist, jeweils ein Ellenbogenprotektorelement oder ein Knieprotektorelement zu tragen.

Dabei kann der angeschnittene Abschnitt einteilig mit der Pferdedecke ausgebildet sein oder alternativ separat vorliegen und an den Grundschnitt der Pferdedecke lösbar angebracht werden; beispielsweise wie ein Halsteil, das dem Fachmann/der Fachfrau bekannt ist.

Im Falle des erfindungsgemäß verlängerten Deckenzuschnitts kann sich dieser von der Brust Richtung Bauch beidseits nach innen erstrecken und dort umgeschlagen werden, um den Abschnitt zu bilden, der die Ellenbogenprotektoren aufnimmt; entsprechend ist für die Knie vorgeschlagen, dass sich der Richtung Gesäß weisende Abschnitt der Pferdedecke nach unten und in Richtung des Bauches beidseits verlängert und auch hier beidseits um die Beine umgeschlagen werden kann.

Eine solche erfindungsgemäße Verlängerung oder Erweiterung kann beispielsweise durch Klettbänder oder durch Gurte mit zugehörigen Gurtschlössern positioniert und befestigt werden. Die entsprechenden Ellenbogenprotektoren und Knieprotektoren liegen dann an den angeschnittenen Deckenabschnitten vor.

Grundsätzlich können diese angeschnittenen Abschnitte auch getrennt vorliegen und werden dann durch entsprechende Befestigungsmittel wie etwa Clips an einem üblichen Deckenzuschnitt nach unten weisend angehängt. Bevorzugt wird eine Pferdedecke, die mit den Abschnitten für Ellenbogenprotektorelementen und Knieprotektorelementen fest verbunden ist, da diese nicht nur dem Schutz der Gelenke dienen, sondern auch die Pferdedecke fixieren.

Nach einer weiteren Ausführungsform der erfindungsgemäßen Pferdedecke können die Abschnitte, die um Ellenbogen und Knie gelegt werden mit Klettbändern, die um das Bein laufend angeordnet sind, befestigt werden. Die Abschnitte, die die Ellenbogenprotektoren und Knieprotektoren aufweisen, können jeweils eine Durchtrittsöffnung aufweisen, die so beschaffen ist, dass ein Klettband hindurch geführt werden und an seinem eigenen Ende befestigt werden kann, dazu kann auch eine Schnalle vorliegen. Wenn eine Schnalle vorliegt, kann das Klettband auch durch die Durchtrittsöffnung hindurch geführt werden und dann an dem gegenüber liegenden Teil des Abschnitts durch die Schnalle gefädelt und auf sich selbst zurück geführt werden.

Nach einer noch weiteren Ausführungsform der erfindungsgemäßen Pferdedecke wird vorgeschlagen, dass die Ellenbogenprotektorelemente und Knieprotektorelemente, damit sie an den Gelenken nicht abrutschen, in Höhe der Gelenkkappe mit einem Verbindungselement zusätzlich an der Pferdedecke fixiert werden, zusätzlich dazu, dass sie durch die Verlängerungsabschnitte mit Befestigungsmitteln wie Klettband um das Gelenk gelegt werden. Nachdem die Verlängerungsabschnitte mit Befestigungsmitteln und den Protektorelementen um das entsprechende Gelenk angelegt und fixiert worden sind, wird vorgeschlagen, dass ein Befestigungsband, das zur Befestigung der Pferdedecke mit den Ellenbogenprotektorelementen an einer rückwärtigen Position, also Richtung Pferdebauch weisend, an der Pferdedecke vorliegt, mit einem korrespondierenden Befestigungselement an dem Abschnitt befestigt wird, der das Ellenbogenprotektorelement trägt. Dasselbe gilt für die Abschnitte der Decke, die die Knieprotektorelemente tragen, abgesehen davon, dass dort das Befestigungselement an einer nach vorne weisenden Position, also ebenfalls Richtung Pferdebauch weisend, mit einem korrespondierenden Befestigungselement an dem Abschnitt befestigt wird, der das Knieprotektorelement trägt. So wird verhindert, dass die Knieprotektorelemente und Ellenbogenprotektorelemente in der Bewegung des Pferdes nicht nach unten unter das Gelenk rutschen.

Vorteilhaft weist die Pferdedecke besonders am Rücken und an der Brust und darüber hinaus beidseits die Knie schützend Protektorelemente auf, so ist ein Pferd umfassend vor Tritten und Bissen anderer Pferde geschützt, wenn es beispielsweise als Neuling einer Herde auf der Koppel zugeführt wird und bei der neuen Festlegung der Rangordnung auch attackiert wird oder wenn es als rangniederes Tier immer mal wieder damit rechnen muss, vor der Futterstelle verbissen zu werden.

Noch vorteilhafter ist es, wenn alle relevanten Körperstellen mit den erfindungsgemäßen Protektoren, die eine körperteilspezifische Geometrie aufweisen, quasi eine Wölbung, geschützt werden.

Grundsätzlich können alle Protektorelemente ein- oder mehrteilig ausgebildet sein. Es wird erfindungsgemäß vorgeschlagen, dass dabei die Größe der Protektorelemente die jeweils zu schützenden Körperteile gut abdeckt.

Für das Rückenprotektorelement, das sich von einem ersten Abschnitt der Pferdedecke, der, wenn das Pferd die Decke trägt, den Widerrist gut überdeckt, bis zu einem zweiten Abschnitt der Pferdedecke verläuft, der beim Tragen der Decke etwas über den Ansatz der Schweifrübe hinausreicht, wird vorgeschlagen, dass das Rückenprotektorelement nicht nur die Breite der Wirbel, die sich von dem ersten Abschnitt zu dem zweiten Abschnitt der Decke erstrecken (wenn sie angelegt ist) überdeckt, sondern dass der Rückenprotektor sich beidseits von der Wirbelsäule nach unten erstreckt, und damit beidseits der Wirbelsäule um 3 bis 20 cm, bevorzugt um 5 bis 13 cm, am meisten bevorzugt um 12 cm in Richtung Bauch kragt. Bei mehrteiligen Rückenprotektoren kann etwa auch das erste Teil eines solchen Rückenprotektors links und rechts des Abschnittes der Pferdedecke, der am Wiederrist des Pferdes liegt, sich etwa mit 10 cm beidseits der Wirbelsäule nach unten erstrecken, während das zweite Teil, das ab den Brustwirbeln des Pferdes positioniert ist, sich um etwa 15 cm nach unten erstreckt. Das dritte Teil kann sich sogar in Richtung der Kruppe verbreitern und sich an seinem Ende um 20 cm, sogar um bis zu 25 cm nach unten erstrecken.

Ein solches Rückenprotektorelement kann ein- oder mehrteilig sein. Die Wahl der Ein- oder Mehrteiligkeit kann sich nach dem Material richten, aus dem die Protektoren gefertigt sind: Ein besonders harter Kunststoff etwa, der sehr schlagfest ist, kann einen mehrteiligen Rückenprotektor nahelegen, um die Bewegungsfreude des Pferdes zu unterstützen. Ein weicherer, aber höchstens wenige Zentimeter dicker geschäumter Kunststoff, der mit Lagendicken von 1 bis 10 cm, bevorzugt von 3 bis 8 cm, besonders bevorzugt mit 5 cm eingesetzt werden kann, kann für einteilige Protektorelemente auch im Rückenbereich eingesetzt werden.

Dass dabei die Größe der Protektorelemente sich an der Größe des zu schützenden Pferdes und entsprechend an der zu wählenden Decken- oder Beinschützergröße, die auch als Gamaschen bezeichnet werden, orientiert, ist dem Fachmann bzw. der Fachfrau bekannt. Mit unterschiedlichen Größen von Decken und Beinschützern lässt sich der Schutz vom Klein- bis zum Großpferd problemlos bereitstellen.

Im Grunde können die Befestigungsvorrichtungen für die Beinschützer als Clips-System gestaltet sein, bzw. nach Art von Strumpfhaltern, wie sie etwa aus Damenwäsche bekannt sind. Dabei können beidenends klammern an den Bändern der strumpfhalterartigen Befestigungsvorrichtungen vorliegen, oder eben nur an den zu den Beinschützern weisenden Enden.

Nach einer noch weiteren Ausführungsform der erfindungsgemäßen Schutzausrüstung kann die Pferdedecke je nach Nutzungszweck ein- oder mehrlagig sein. Dabei können de Protektorelemente entweder auf einer einzigen oder einer oberen Lage, die bei einem Anlegen der Pferdedecke von dem Pferdeleib abgewandt zu liegen kommt, angeordnet sein, oder auch an einer Unterseite hiervon, oder auch zwischen zwei Lagen. Nach einer noch weiteren Ausführungsform der erfindungsgemäßen Schutzausrüstung kann ein Protektor aus der Gruppe, die Rückenprotektorelemente, Brustprotektorelemente, Rippenprotektorelemente, Flankenprotektorelemente, Schulterprotektorelemente, Ellenbogenprotektorelemente und Knieprotektorelemente umfasst, durch Aufnähen auf eine Lage der Pferdedecke befestigt werden. Wenn die Pferdedecke eine Lage hat, kann also der Protektor von oben oder unten, also körperseitig oder vom Körper des Pferdes weg weisend befestigt sein. Wenn diese eine Lage ein entsprechend verschweißgeeigneter Kunststoff ist, kann statt Aufnähen auch Verschweißen als Befestigungstechnik eingesetzt werden. Wenn die Pferdedecke zwei Lagen hat, so kann der entsprechende Protektor auch zwischen zwei Lagen eingenäht sein, oder mit einer Lage verschweißt, wohingegen die zweite über dem Protektor zu liegen kommt.

Alternativ können für die Protektoren auch Taschen an der Innen- oder Außenseite der einen oder beider Lagen angebracht sein, in die das jeweilige Protektorelement eingelegt wird. Die Taschen können verschließbar sein, etwa durch einen Klettverschluss oder alternativ durch Druckknöpfe oder Reißverschluss. Eine aufgebrachte Tasche wird hierin im Übrigen nicht als ergänzende Lage, sondern im Sinne eines Befestigungselements verstanden. Unter einer zweilagigen Decke wird beispielweise eine solche verstanden, die an der pferdekörperabgewandten Seite aus einer wasserabweisenden Kunststofflage besteht, bspw. aus einem Außenmaterial aus 600 Denier Polyester, während eine Innenlage an der körpernahen Seite aus einem anderen Material besteht, das etwa ein atmungsfähiges Polyester ist, oder eine Materialkombination oder sonstiges. Natürlich können hier beliebige Materialkombinationen in Frage kommen, wobei der Fachmann weiß, dass das Material auf die Befestigungstechnik der Taschen abzustimmen ist.

Damit können die Protektoren vorteilhaft aus der Pferdedecke herausgenommen werden, wenn diese etwa gewaschen wird, oder wenn ein dünneres gegen ein dickeres Protektorelement ausgetauscht wird, oder wenn ein anderes Protektormaterial gewählt wird; hier gibt es vielfältige Möglichkeiten.

Eine noch weitere Ausführungsform der erfindungsgemäßen Schutzausrüstung schlägt vor, dass die Vorderfußwurzelgelenkprotektoren und bzw. alternativ die Sprunggelenkprotektoren auch durch Aufnähen auf oder Verschweißen mit einem Material einer oder mehrerer Lagen der Beinschützer auf diesen befestigt sind.

Alternativ können auch die Beinschützer an der einen oder an den mehreren Lagen verschließbare Taschen zur Aufnahme von dem oder den Vorderfußwurzelgelenkprotektoren und/oder Sprunggelenkprotektoren aufweisen. Für die Taschen und das Vernähen oder Verschweißen gilt, was bereits zu der Pferdedecke gesagt wurde.

Schließlich können die Rückenprotektorelemente, Brustprotektorelemente, Rippenprotektorelemente, Flankenprotektorelemente, Schulterprotektorelemente, Ellenbogenprotektorelemente, Knieprotektorelemente, die Vorderfußwurzelgelenkprotektoren und die Sprunggelenkprotektoren aus einem Material aus der Gruppe beschaffen sein, die Kunststoffe unterschiedlicher Härtegrade und Fexibilitäten umfasst, auch in geschäumtem Zustand, und auch in Materialkombinationen.

Nach noch einer weiteren Ausführungsform der erfindungsgemäßen Schutzausrüstung kann einer oder können mehrere der Rückenprotektorelemente, Brustprotektorelemente, Rippenprotektorelemente, Flankenprotektorelemente, Schulterprotektorelemente, Ellenbogenprotektorelemente, Knieprotektorelemente, der Vorderfußwurzelgelenkprotektoren und der Sprunggelenkprotektoren statt flächig auch körperkonturabbildend ausgeformt sein - die dreidimensionale Ausformung gibt dem Pferd Bequemlichkeit bei der Bewegung, besonders, wenn die entsprechenden Protektoren mehrteilig ausgebildet sind.

Das Brustprotektorelement kann darüber hinaus eine oder mehrere Ausnehmungen für die Durchführung von Verschluss- oder Befestigungselementen haben, die zum Verschließen der beiden Flügel, die eine solche Pferdedecke auf der Brust aufweist, dienen.

Weitere Ausführungsformen sowie einige der Vorteile, die mit diesen und weiteren Ausführungsformen der Schutzausrüstung verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich schematische Darstellungen von Ausführungsformen der Erfindung.

Dabei zeigen:
- **Fig. 1**: eine Seitenansicht auf eine Schutzvorrichtung, die aus einer Decke besteht und die einem Pferd angelegt ist,
- **Fig. 2**: eine Seitenansicht auf eine Schutzvorrichtung nach Fig. 1, erfindungsgemäß erweitert um Beinschützer,
- **Fig. 3**: eine Draufsicht auf eine erfindungsgemäße Schutzvorrichtung aus einer Pferdedecke mit dreiteiligem Rückenprotektorelement.

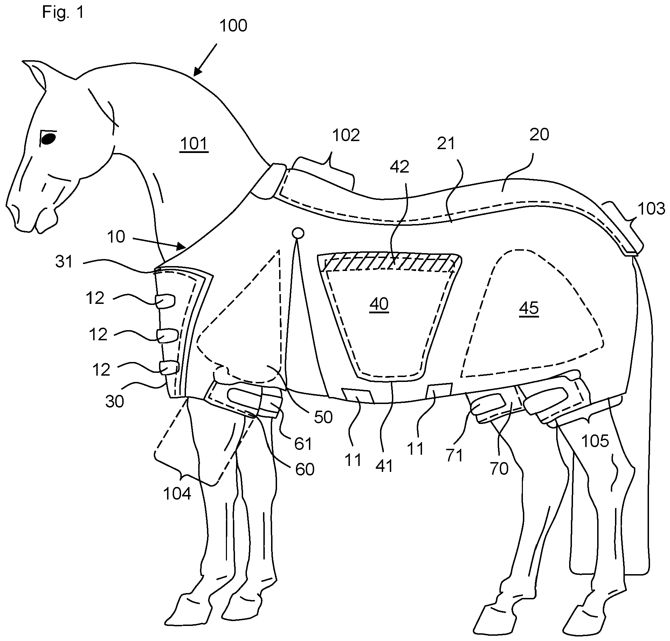

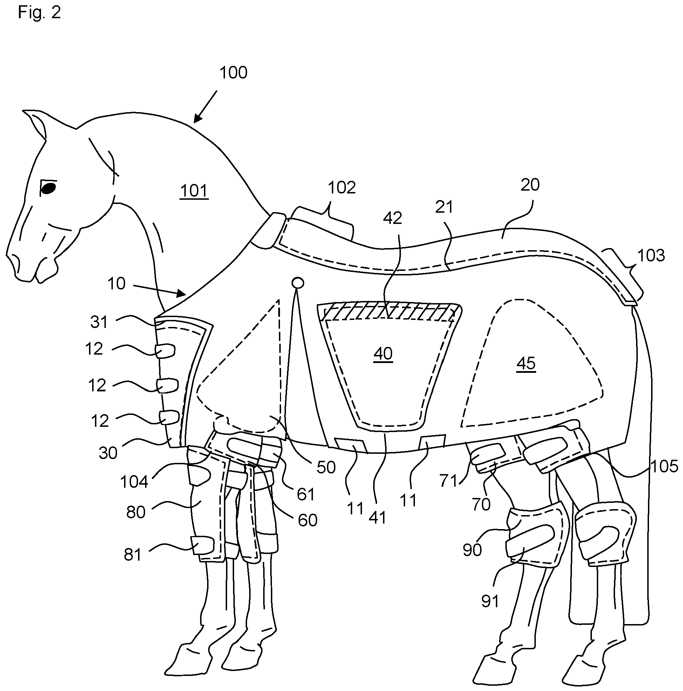

Die vorliegende Erfindung bezieht sich auf eine Schutzausrüstung für Pferde. Sie dient vorteilhaft dazu, Pferde, die in Kontakt mit anderen Pferden kommen, etwa beim gemeinsamen Koppelgang, vor Tritten und Bissen der anderen Pferde zu schützen. Geeigneter Weise sollten dabei vorrangig Rücken, Brust und Rippen geschützt sein. Daher wird eine Schutzausrüstung aus einer Pferdedecke vorgeschlagen, wie sie in **Fig. 1** und erfindungsgemäß in **Fig. 2** gezeigt ist, angelegt an einem Pferd 100. Die in **Fig. 2** gezeigte erfindungsgemäße Pferdedecke 10 hat einen Schnitt, der dem Leib 101 des Pferdes 100 angepasst ist und bequemes Bewegen ermöglicht; die Pferdedecke 10 erstreckt sich vom Widerrist bis über die Kruppe hinaus bis zur Schweifrübe; sie fällt von der Wirbelsäule zu beiden Seiten am Körper herab und endet unterhalb des Bauches; die beiden sich nach unten erstreckenden Teile der Pferdedecke 10 können durch Befestigungsmittel, angedeutet durch die Enden von Gurten 11 einer Kreuzbegurtung, unter dem Bauch miteinander verbunden werden, um einen sicheren Sitz der Pferdedecke 10 zu gewährleisten, auch wenn sich das Pferd beispielsweise wälzt. Eine Kreuzbegurtung ist hierfür gut bekannt. Die Decke ist nach vorn zur Brust so angeschnitten, dass sie vor der Brust geschlossen werden kann.

**Fig. 1** **und** **2** zeigen vor der Brust eine Befestigung mit drei Klettbändern 12, die als Querriegel angeordnet sind. Es können aber auch Bänder mit Bandschlössern eingesetzt werden.

**Fig. 1** **und** **2** zeigen Protektorelemente, die dort an der Pferdedecke 10 angebracht sind. Es sind dort ein Rückenprotektorelement 20, das sich von einem ersten Abschnitt 102 am Widerrist bis hin zu einem zweiten Abschnitt 103, der bei der Schweifrübe liegt, sowie ein Brustprotektorelement 30 vor der Brust des Pferdes 100 und an dem zu sehenden Seitenteil der Pferdedecke jeweils ein Rippenprotektorelement 40 am Rippenbereich, ein Flankenprotektorelement 45, das über der Flanke positioniert wird, ein Schulterprotektorelement 50, das über der Schulter liegt, stricheliert zu sehen. Die zweite Seite der Decke trägt diese Protektorelemente ebenfalls.

Grundsätzlich könnte die Decke mit einer Auswahl der vorgeschlagenen Protektorelemente so zum Einsatz kommen; es ist bspw. möglich, dass nur der Rückenschutz und der Brustschutz durch die entsprechenden Protektoren gegeben ist. Vorteilhaft ist aber eine umfassende Ausstattung mit sämtlichen der vorgeschlagenen Protektorelemente.

Darüber hinaus weist die in **Fig. 1** gezeigte und die erfindungsgemäße in **Fig. 2** gezeigte Pferdedecke 10 einen Schnitt auf, der über den Schnitt einer Pferdedecke 10 gemäß Stand der Technik hinausgeht, denn sie verfügt über zwei angeschnittene Abschnitte 104, die, wenn das Pferd die Pferdedecke 10 trägt, im Bereich der Ellenbogen zu liegen kommen, und über zwei angeschnittene Abschnitte 105 im Bereich der Knie des Pferdes. **Fig. 2** zeigt die Schutzausrüstung erfindungsgemäß ergänzt um zwei Paar Beinschützer 80, 90, die mit Klettbändern 81, 91 um das Bein herum befestigt sind; vorne sind an den Beinschützern 80 Vorderfußwurzelgelenkprotektoren angeordnet und hinten Sprunggelenkprotektoren.

Die im Bereich der Ellenbogen angeschnittenen Abschnitte 104 tragen hier Ellenbogenprotektorelemente 60, stricheliert zu sehen, und die angeschnittene Abschnitte 105 im Bereich der Knie tragen Knieprotektorelemente 70, ebenfalls stricheliert zu sehen. Die angeschnittenen Abschnitte 104, 105 sind dort mit Klettbändern 61, 71 ausgestattet, um die Beine herum befestigt zu werden.

Natürlich könnte eine erfindungsgemäße Pferdedecke 10 auch nur mit den Knieprotektorelementen 70 oder nur mit den Ellenbogenprotektorelementen 60 ausgestattet sein.

Die Befestigungsmöglichkeiten der Protektorelemente sind in **Fig. 1** **und** **2** beispielhaft gezeigt; so ist in den Seitenansichten jeweils ein durchgängiges Rückenprotektorelement 20 stricheliert gezeigt, das hier von unten gegen die obere Lage der Pferdedecke 10 genähte ist; man sieht folglich das Rückenprotektorelement 20 von außen selbst nicht, wohl aber seine Umrandung 21, hier eine Naht 21. Das Rückenprotektorelement 20 könnte auch mit der Pferdedecke 10 verschweisst sein; das ist wieder eine Frage der Materialwahl, die für den Fachmann keine Schwierigkeit darstellt. Auf dieselbe Weise ist das Brustprotektorelement 30 durch eine Naht 31 mit dem Brustabschnitt der Pferdedecke 10 verbunden, auch die Ellenbogenprotektorelemente 60 und auch die in **Fig. 1** **und** **2** gezeigten Beinprotektorelemente 80, 90 sind aufgenäht, könnten aber ebenso in Taschen aufgenommen sein. Eine Tasche 41 ist nachfolgend als alternative Befestigung beispielhaft in Verbindung mit dem Rippenprotektorelement 40 beschrieben:
Das Rippenprotektorelement 40 ist in eine Tasche 41 eingesteckt, deren Umrandungsnaht zu sehen ist. Die Tasche ist an ihrer breitesten Kante mit zwei korrespondierenden Klettstreifen 42 geschlossen. So kann das Rippenprotektorelement 40 leicht herausgenommen werden, etwa zum Waschen der Pferdedecke.

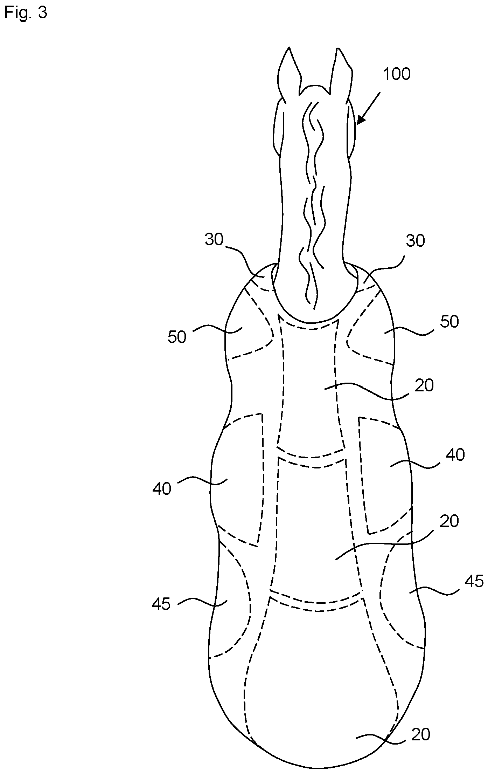

Das in den **Fig. 1****,****2** gezeigte Rückenprotektorelement 20, das sich vom Widerrist des Pferdes 100 (erster Abschnitt 102) bis zur Schweifrübe des Pferdes 100 (zweiter Abschnitt 103) erstreckt, ist einteilig ausgebildet und ragt beidseits 15 cm Richtung Bauch. Damit sind die Wirbel vorteilhaft gut abgedeckt. Je nach Materialwahl kann es auch günstig sein, das Rückenprotektorelement mehrteilig zu gestalten, was beispielhaft in **Fig. 3** in der Draufsicht zu sehen ist. Der erste Teil des Rückenprotektors 20 kragt dort links etwa um 10 cm beidseits der Wirbelsäule nach unten, wohingegen der zweite Teil, der ab den Brustwirbeln des Pferdes positioniert ist, sich um etwa 15 cm nach unten erstreckt. Der dritte Teil des Rückenprotektors 20 verbreitert sich dort in Richtung der Kruppe von anfangs 20 cm beidseits der Wirbelsäule bis endseitig 25 cm nach unten.

Ganz grundsätzlich könnte man in einer beispielhaften Ausführungsform einer erfindungsgemäßen Pferdedecke das Material, aus dem die Protektorelemente gefertigt sind, entsprechend drei Kategorien auswählen:
So könnten die Protektorelemente einer ersten Kategorie die Rückenprotektorelemente sein, die quasi dem Verbissschutz am Rücken der Pferde dienen und die, da sie Tritten quasi kaum ausgesetzt sind, ohne Polsterung auskommen könnten. Diese Rückenprotektorelemente können aus einem Kunststoff wie beispielsweise flexiblem Polypropylen gefertigt sein, das auch einen Formling bilden und damit die Wölbung des Rückens abbilden kann. Ein solches Kunststoff-Rückenprotektorelement kann eine Dicke im Bereich von 1 mm bis 2 mm aufweisen.

Einer zweiten Kategorie könnte man die Rippen-, Flanken- oder Schulterprotektorelemente zuordnen, die beispielswese eine reine Polsterung aus Schaumstoff, bevorzugt Polyethylen, oder auch einer Kombination aus beidem im Verbund aufweisen können.

Eine dritte Kategorie können die Protektoren bilden, die Gelenke schützen, also die Knie-, Ellenbogen-, Sprunggelenks- und Vorderfusswurzelgelenksprotektorelemente. Diese können aus einem Verbund von Kunststoffen beschaffen sein, etwa eine harte Außenschale aus Polypropylen aufweisen, der mit einem Schaumstoffmaterial, etwa aus Polyethylen, kombiniert ist. Auch hier ist ein dreidimensionaler Formling geeignet. Eine Dicke in einem Bereich von 1,5 mm bis 2 cm, bevorzugt von 4,0 mm bis 1,5 cm, besonders bevorzugt von 4,0 mm bis 1,0 cm wird vorgeschlagen.

Werden die Protektorelemente in Taschen eingelegt, so können diese aus dem Textilmaterial der Decke beschaffen sein. Geeignet für beides sind reißfeste Kunstfasern.

Figurativ nicht gezeigt ist, dass die Pferdedecke in dem Abschnitt, der beim Tragen nahe der Brust und den Ellbogen liegt, erste Befestigungsvorrichtungen aufweist, und die Beinschützer, die die Vorderfußwurzelgelenkprotektoren umfassen, entsprechende zweite Befestigungsvorrichtungen aufweisen, die mit den ersten Befestigungsvorrichtungen lösbar verbindbar sind. Das können beispielsweise Clips sein, so dass die Beinschützer mit den Vorderfußwurzelgelenkprotektoren durch Clips mit der Pferdedecke verbunden werden können, um so auch nicht am Bein herunter zu rutschen. Clips können generell auch durch andere geeignete Befestigungsmittel ersetzt werden, etwa durch Reisverschlüsse oder Druckknöpfe. Genau so kann für die Befestigung der Beinschützer, die die Sprunggelenkprotektoren umfassen, vorgegangen werden: Dazu kann die Pferdedecke in dem Abschnitt, der bei den Knien liegt, dritte Befestigungsvorrichtungen aufweisen; entsprechend tragen die Beinschützer, die die Sprunggelenkprotektoren umfassen, vierte Befestigungsvorrichtungen, die mit den dritten Befestigungsvorrichtungen der Pferdedecke lösbar verbindbar sind.

Es ist möglich, ein- oder mehrlagige Pferdedecken einzusetzen bei der die Protektoren zwischen zwei Lagen angeordnet bzw. befestigt sind. Das Befestigen kann mittels Aufnähen auf oder Verschweißen mit einem Material der einen oder mehreren Lagen der Pferdedecke erfolgen. Es ist auch möglich, dass an einer oder beiden Lagen verschließbare Taschen zur Aufnahme von dem oder den Protektorelementen vorliegen. Dann können die Protektorelemente verschiedener Dicken bspw. ausgetauscht werden, oder einfach herausgenommen werden, wenn die Pferdedecke oder die Beinschützer gewaschen werden sollen.

Auch die Vorderfußwurzelgelenkprotektoren und auch die Sprunggelenkprotektoren können durch Aufnähen auf oder durch Verschweißen mit einem Material auf einer oder mehrerer Lagen der Beinschützer auf diesen befestigt sein; alternativ können auch die Beinschützer über Taschen verfügen, die an einer oder beiden der Beinschützer-Materiallagen vorliegen, um die Protektorelemente aufzunehmen.

Die Protektorelemente können aus Schaumstoff oder Kunststoff oder reißfestem Gewebe bestehen, oder aus einem anderen Tritt- und Beißschutz bildenden Material.

Grundsätzlich können die Protektorelemente flächig sein, aber gerade am Rücken, insbesondere wenn mehrteilige Rückenprotektoren verwendet werden, können erfindungsgemäß körperkonturabbildende Protektoren eingesetzt werden, auch an den Gelenken ist bspw. eine gemoldete Form geeignet.

### BEZUGSZEICHENLISTE

- 10: Pferdedecke
- 11,12: Befestigungsvorrichtungen zum lösbaren Befestigen der Pferdedecke
- 20: Rückenprotektorelemente
- 21: Naht, Umrandung
- 30: Brustprotektorelemente
- 31: Naht
- 40: Rippenprotektorelemente
- 41: Tasche
- 42: Klettstreifen
- 45: Flankenprotektorelement
- 50: Schulterprotektorelemente
- 60: Ellenbogenprotektorelemente
- 61: Klettband
- 70: Knieprotektorelement
- 71: Klettband
- 80: Beinschützer
- 81: Klettband
- 90: Beinschützer
- 91: Klettband
- 100: Pferd
- 101: Pferdeleib
- 102: erster Abschnitt
- 103: zweiter Abschnitt
- 104: am Ellenbogen angeschnittener Abschnitt
- 105: Abschnitt

## Patentansprüche

1. Schutzausrüstung, ausgebildet zum Anlegen an einem Pferd (100), wobei die Schutzausrüstung eine Pferdedecke (10) umfasst, die einen der Geometrie eines Pferdekörpers angepassten Grundzuschnitt aufweist und dazu ausgebildet ist, einen Pferderücken, einen Pferdbauch seitlich und eine Pferdebrust zu bedecken, wobei die Pferdedecke (10) Befestigungsvorrichtungen (11, 12) zum lösbaren Befestigen der Pferdedecke (10) auf einem Pferdeleib (101) aufweist,
wobei an der Pferdedecke (10) zumindest ein Protektorelement aus der Gruppe umfassend Rückenprotektorelemente (20), Brustprotektorelemente (30), Rippenprotektorelemente (40), Flankenprotektorelemente (45), Schulterprotektorelemente (50), Ellenbogenprotektorelemente (60) und Knieprotektorelemente (70) angeordnet ist,
**dadurch gekennzeichnet, dass**
die Schutzausrüstung zumindest ein Paar Beinschützer (80, 90) mit Beinprotektoren aufweist, die ausgewählt sind aus der Gruppe umfassend Vorderfußwurzelgelenkprotektoren und Sprunggelenkprotektoren, und
die Pferdedecke (10) in einem Abschnitt (104), der bei einer Anordnung der Pferdedecke (10) an einem Pferd (100) nahe einer Brust und den Ellbogen liegt, erste Befestigungsvorrichtungen aufweist,
und dass die Beinschützer (80), die die Vorderfußwurzelgelenkprotektoren umfassen, zweite Befestigungsvorrichtungen aufweisen, die mit den ersten Befestigungsvorrichtungen lösbar verbindbar sind,
und/oder wobei
die Pferdedecke (10) in einem Abschnitt (105), der bei einer Anordnung der Pferdedecke (10) an einem Pferd (100) nahe den Knien liegt, dritte Befestigungsvorrichtungen aufweist,
und dass die Beinschützer (90), die die Sprunggelenkprotektoren umfassen, vierte Befestigungsvorrichtungen aufweisen, die mit den dritten Befestigungsvorrichtungen der Pferdedecke (10) lösbar verbindbar sind.

2. Schutzausrüstung nach Anspruch 1,
**dadurch gekennzeichnet, dass**
der Grundzuschnitt der Pferdedecke (10) zumindest zwei angeschnittene Abschnitte aufweist, die dazu ausgebildet sind, bei einer Anlage der Pferdedecke (10) in einem Bereich eines Übergangs von dem Pferdeleib (101) zu den Beinen zu liegen zu kommen, wobei die zumindest zwei angeschnittenen Abschnitte der Pferdedecke (10) zumindest jeweils eines der Ellenbogenprotektorelemente (60) oder Knieprotektorelemente (70) aufweisen.

3. Schutzausrüstung nach Anspruch 1 oder 2,
**dadurch gekennzeichnet, dass**
das Rückenprotektorelement (20) sich von einem ersten Abschnitt (102) der Pferdedecke (10), der zur Anlage an einem Widerrist des Pferdes (100) ausgebildet ist, bis zu einem zweiten Abschnitt (103) der Pferdedecke (10), der zur Anlage an einer Schweifrübe (103) des Pferdes (100) ausgebildet ist, erstreckt, wobei das Rückenprotektorelement (20) dazu ausgebildet ist, die Breite der Wirbel, die sich von dem ersten Abschnitt (102) zu dem zweiten Abschnitt (103) erstrecken, beidseits der Wirbelsäule um 3 bis 15 cm, bevorzugt um 5 bis 13 cm, am meisten bevorzugt um 12 cm zu überdecken, und wobei das Rückenprotektorelement (20) ein- oder mehrteilig ist.

4. Schutzausrüstung nach zumindest einem der Ansprüche 1 bis 3,
**dadurch gekennzeichnet, dass**
die Pferdedecke (10) ein- oder mehrlagig ist, wobei die Protektorelemente
- auf einer einzigen oder einer oberen Lage, die bei einem Anlegen der Pferdedecke (10) von dem Pferdeleib (101) abgewandt zu liegen kommt, angeordnet sind, oder
- zwischen zwei Lagen angeordnet sind.

5. Schutzausrüstung nach Anspruch 4,
**dadurch gekennzeichnet, dass**
der eine oder die mehreren Protektoren aus der Gruppe umfassend Rückenprotektorelemente (20), Brustprotektorelemente (30), Rippenprotektorelemente (40), Flankenprotektorelemente (45), Schulterprotektorelemente (50), Ellenbogenprotektorelemente (60), Knieprotektorelemente (70) durch Aufnähen auf oder Verschweißen mit einem Material der einen oder mehreren Lagen der Pferdedecke (10) befestigt sind, und/oder dass die Pferdedecke (10) an der einen oder mehreren Lagen verschließbare Taschen zur Aufnahme von dem oder den Protektorelementen aufweist.

6. Schutzausrüstung nach zumindest einem der Ansprüche 1 bis 5,
**dadurch gekennzeichnet, dass**
die Vorderfußwurzelgelenkprotektoren und/oder Sprunggelenkprotektoren durch Aufnähen auf oder Verschweißen mit einem Material einer oder mehrerer Lagen der Beinschützer (80, 90) auf diesen befestigt sind, und/oder dass die Beinschützer (80, 90) an der einen oder mehreren Lagen verschließbare Taschen (41) zur Aufnahme von dem oder den Vorderfußwurzelgelenkprotektoren und/oder Sprunggelenkprotektoren aufweisen.

7. Schutzausrüstung nach zumindest einem der vorstehenden Ansprüche,
**dadurch gekennzeichnet, dass**
die Rückenprotektorelemente (20), Brustprotektorelemente (30), Rippenprotektorelemente (40), Flankenprotektorelemente (45), Schulterprotektorelemente (50), Ellenbogenprotektorelemente (60), Knieprotektorelemente (70), die Vorderfußwurzelgelenkprotektoren und die Sprunggelenkprotektoren aus einem Material aus der Gruppe umfassend harte, weiche und geschäumte Kunststoffe oder einer Kombination der vorgenannten bestehen.

8. Schutzausrüstung nach zumindest einem der vorstehenden Ansprüche,
**dadurch gekennzeichnet, dass**
die Rückenprotektorelemente (20), Brustprotektorelemente (30), Rippenprotektorelemente (40), Flankenprotektorelemente (45), Schulterprotektorelemente (50), Ellenbogenprotektorelemente (60), Knieprotektorelemente (70), die Vorderfußwurzelgelenkprotektoren und die Sprunggelenkprotektoren flächig oder körperkonturabbildend ausgeformt sind.

## Claims

1. Protective equipment formed for applying to a horse (100), wherein the protective equipment comprises a horse blanket (10), which has a basic cut adapted to the geometry of a horse's body and which is formed for covering a horse's back, a horse's belly on the side and a horse's chest, wherein the horse blanket (10) has fastening devices (11, 12) for releasably fastening the horse blanket (10) to a horse's body (101), wherein at least one protector element from the group comprising back protector elements (20), chest protector elements (30), rib protector elements (40), flank protector elements (45), shoulder protector elements (50), elbow protector elements (60) and knee protector elements (70) is arranged on the horse blanket (10),
**characterized in that**
the protective equipment has at least one pair of leg guards (80, 90) with leg protectors, which are selected from the group comprising pastern joint protectors and ankle joint protectors, and
horse blanket (10) has first fastening devices in a section (104), which, when the horse blanket (10) is arranged on a horse (100), lies close to a chest and the elbows,
and that the leg guards (80), which comprise the pastern joint protectors, have second fastening devices, which can be releasably connected to the first fastening devices, and/or wherein
in a section (105), which lies close to the knees when the horse blanket (10) is arranged on a horse (100), the horse blanket (10) has third fastening devices,
and that the leg guards (90), which comprise the ankle joint protectors, have fourth fastening devices, which can be releasably connected to the third fastening devices of the horse blanket (10).

2. The protective equipment according to claim 1,
**characterized in that**
the basic cut of the horse blanket (10) has two cropped sections, which are formed for coming to rest in an area of a transition from the horse's body (101) to the legs when the horse blanket (10) is applied, wherein the at least two cropped sections of the horse blanket (10) in each case have at least one of the elbow protector elements (60) or knee protector elements (70).

3. The protective equipment according to claim 1 or 2,
**characterized in that**
the back protector element (20) extends from a first section (102) of the horse blanket (10), which is formed for resting again withers of the horse (100), all the way to a second section (103) of the horse blanket (10), which is formed for resting against a fleshy base of the tail (103) of the horse (100), wherein the back protector element (20) is formed for covering the width of the vertebrae, which extend from the first section (102) to the second section (103), on both sides of the spine by 3 to 15 cm, preferably by 5 to 13 cm, most preferably by 12 cm, and wherein the back protector element (20) is of one- or multi-piece design.

4. The protective equipment according to at least any one of claims 1 to 3,
**characterized in that**
the horse blanket (10) is of one- or multi-layer design, wherein the protector elements
- are arranged on a single or an upper layer, which comes to rest so as to face away from the horse's body (101) when the horse blanket (10) is applied,
or
- are arranged between two layers.

5. The protective equipment according to claim 4,
**characterized in that**
the one or the several protectors from the group comprising back protector elements (20), chest protector elements (30), rib protector elements (40), flank protector elements (45), shoulder protector elements (50), elbow protector elements (60), knee protector elements (70) are fastened by means of sewing on or welding to a material of the one or several layers of the horse blanket (10), and/or that the horse blanket (10) has closable pockets on the one or several layers for receiving the protector element or elements.

6. The protective equipment according to at least any one of claims 1 to 5,
**characterized in that**
the pastern joint protectors and/or ankle joint protectors are fastened to the leg guards (80, 90) by sewing on or welding with a material of one or several layers thereof, and/or that the leg guards (80, 90) have closable pockets (41) on the one or several layers for receiving the pastern joint protector or protectors and/or ankle joint protectors.

7. The protective equipment according to at least any one of the preceding claims,
**characterized in that**
the back protector elements (20), chest protector elements (30), rib protector elements (40), flank protector elements (45), shoulder protector elements (50), elbow protector elements (60), knee protector elements (70), the pastern joint protectors and the ankle joint protectors consist of a material from the group comprising hard, soft and foamed plastics or a combination of the afore-mentioned.

8. The protective equipment according to at least any one of the preceding claims,
**characterized in that**
the back protector elements (20), chest protector elements (30), rib protector elements (40), flank protector elements (45), shoulder protector elements (50), elbow protector elements (60), knee protector elements (70), the pastern joint protectors and the ankle joint protectors are molded to be flat or to copy the body contour.

## Revendications

1. Équipement de protection conçu pour être utilisé sur un cheval (100), l'équipement de protection comprenant une couverture de cheval (10) qui présente une coupe de base adaptée à la géométrie du corps d'un cheval et qui est conçue pour couvrir le dos d'un cheval, les côtés du ventre d'un cheval et le poitrail d'un cheval, la couverture de cheval (10) comportant des dispositifs d'attache (11, 12) permettant de fixer de manière amovible la couverture de cheval (10) sur le corps d'un cheval (101), au moins un élément de protection, dans le groupe comprenant les éléments de protection du dos (20), les éléments de protection du poitrail (30), les éléments de protection des côtes (40), les éléments de protection des flancs (45), les éléments de protection des épaules (50), les éléments de protection des coudes (60) et les éléments de protection des grassets (70), étant fixé à la couverture de cheval (10),
**caractérisé en ce que**
l'équipement de protection comprend au moins une paire de protège-membres (80, 90) avec des protections de membres choisies dans le groupe comprenant les protections des carpes et les protections des jarrets, et
la couverture de cheval (10) comprend des premiers dispositifs d'attache dans une partie (104) qui, lorsque la couverture de cheval (10) est en place sur un cheval (100), est proche du poitrail et des coudes,
et **en ce que** les protège-membres (80) qui comprennent les protections des carpes, comportent des deuxièmes dispositifs d'attache qui peuvent être reliés de manière amovible aux premiers dispositifs d'attache,
et/ou
la couverture de cheval (10) comportant des troisièmes dispositifs d'attache dans une partie (105) qui se trouve près des grassets lorsque la couverture de cheval (10) est en place sur un cheval (100),
et **en ce que** les protège-membres (90) qui comprennent les protections des jarrets, comportent des quatrièmes dispositifs d'attache qui peuvent être reliés de manière amovible aux troisièmes dispositifs d'attache de la couverture de cheval (10).

2. Équipement de protection selon la revendication 1,
**caractérisé en ce que**
la coupe de base de la couverture de cheval (10) comprend au moins deux parties découpées qui sont adaptées pour être placées, lorsque la couverture de cheval (10) est en place, dans une zone de transition entre le corps du cheval (101) et les membres, lesdites au moins deux parties découpées de la couverture de cheval (10) comprenant au moins l'un des éléments de protection des coudes (60) ou éléments de protection des grassets (70).

3. Équipement de protection selon la revendication 1 ou 2,
**caractérisé en ce que**
l'élément de protection du dos (20) s'étend d'une première partie (102) de la couverture de cheval (10), qui est conçue pour s'appuyer sur le garrot d'un cheval (100), jusqu'à une deuxième partie (103) de la couverture de cheval (10), qui est conçue pour s'appuyer sur la base de la queue (103) d'un cheval (100), l'élément de protection du dos (20) étant conçu pour recouvrir la largeur des vertèbres qui s'étendent de la première partie (102) à la deuxième partie (103) de 3 à 15 cm, préférablement de 5 à 13 cm, plus préférablement de 12 cm, de part et d'autre de la colonne vertébrale, et l'élément de protection du dos (20) étant conçu en une ou plusieurs parties.

4. Équipement de protection selon au moins l'une des revendications 1 à 3,
**caractérisé en ce que**
la couverture de cheval (10) comprend une ou plusieurs couches, les éléments de protection étant
- disposés sur une seule couche ou sur une couche supérieure qui se trouve à l'opposé du corps du cheval (101) lorsque la couverture de cheval (10) est en place ou
- disposés entre deux couches.

5. Équipement de protection selon la revendications 4,
**caractérisé en ce que**
l'élément ou les éléments de protection du groupe comprenant les éléments de protection du dos (20), les éléments de protection du poitrail (30), les éléments de protection des côtes (40), les éléments de protection des flancs (45), les éléments de protection des épaules (50), les éléments de protection des coudes (60), les éléments de protection des grassets (70) sont fixés par couture sur ou par soudage avec un matériau de la ou des couches de la couverture de cheval (10), et/ou **en ce que** la couverture de cheval (10) présente, sur la ou les couches, des poches pouvant être fermées pour recevoir le ou les éléments de protection.

6. Équipement de protection selon au moins l'une des revendications 1 à 5,
**caractérisé en ce que**
les protections des carpes et/ou les protections des jarrets sont fixées sur les protège-membres (80, 90) par couture ou par soudage avec un matériau de la ou des couches des protège-membres, et/ou **en ce que** les protège-membres (80, 90) présentent, sur la ou les couches, des poches (41) pouvant être fermées pour recevoir la ou les protections des carpes et/ou les protections des jarrets.

7. Équipement de protection selon au moins l'une des revendications précédentes,
**caractérisé en ce que**
les éléments de protection du dos (20), les éléments de protection du poitrail (30), les éléments de protection des côtes (40), les éléments de protection des flancs (45), les éléments de protection des épaules (50), les éléments de protection des coudes (60), les éléments de protection des grassets (70), les protections des carpes et les protections des jarrets sont fabriqués dans un matériau choisi dans le groupe comprenant des matières plastiques dures, souples et expansées, ou d'une combinaison de ces matériaux.

8. Équipement de protection selon au moins l'une des revendications précédentes,
**caractérisé en ce que**
les éléments de protection du dos (20), les éléments de protection du poitrail (30), les éléments de protection des côtes (40), les éléments de protection des flancs (45), les éléments de protection des épaules (50), les éléments de protection des coudes (60), les éléments de protection des grassets (70), les protections des carpes et les protections des jarrets sont formés à plat ou en dessinant les contours du corps.
